# EUROPEAN PATENT SPECIFICATION

(11) **EP 1 484 868 B1**
(45) Date of publication and mention of the grant of the patent: **09.06.2010**
(21) Application number: 04102503.2
(22) Date of filing: 03.06.2004
(51) Int. Cl.: H04W 84/20

(54) **Network-based piconet without the use of a piconet coordinator**
Netzwerkbasiertes Piconetz ohne Verwendung eines Piconetz-Koordinators
Piconet basé sur un réseau sans utilisation d'un coordinateur de piconet

(30) Priority: 03.06.2003 KR 2003035775
(43) Date of publication of application: 08.12.2004
(73) Proprietor: SAMSUNG ELECTRONICS CO., LTD., Suwon-si, Gyeonggi-Do 442-742 (KR)
(72) Inventor: An, Cheol-hong 248-806 SsangyonAPT, Suwon-si Gyeonggi-do (KR)
(74) Representative: Read, Matthew Charles

(56) References cited:
- WO-A-02/41586
- WO-A-02/052793
- US-A1- 2002 085 719
- US-A1- 2002 094 777

## Description

The present invention relates to an apparatus and method for enabling efficient transmission and reception of data between wireless network devices, and more particularly, to an apparatus and method for enabling transmission and reception of data between wireless network devices in an ad hoc network-based piconet without the use of a piconet coordinator (PNC).

With the development and popularisation of digital technologies, increasingly a large number of digital products have become available on the market. Many digital products such as DVD players, cable set-top boxes, digital video cassette recorders, digital television (DTV) sets and personal computers are connected by one network. The development of wireless communication technology attempts to connect such devices together in a wireless manner rather than by wires.

Communications between devices within a wireless personal area network (PAN), are defined by the existing IEEE 802.15.3. This allows devices to form a "piconet", and as such, the devices gain access to a wireless medium (WM) (such as a wireless channel) for communication with one another. The access/control of the wireless medium is coordinated using information provided by a piconet network coordinator (PNC). The information provided by the PNC is broadcast to each device using a beacon. Each piconet is identified by a piconet ID (PNID) and a beacon source ID (BSID). The PNID and BSID are defined by the PNC. The PNC further provides many significant functions as shown in the accompanying figures and related text. These functions may exist in one device in the same manner as one device function.

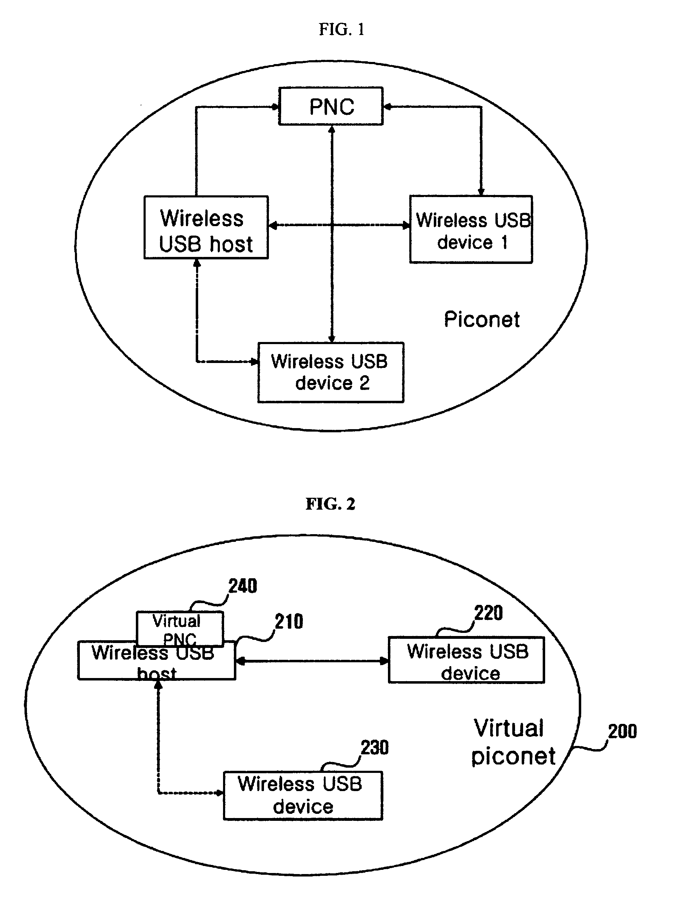

As shown in Figure 1, the PNC provides a method and management enabling devices to share one wireless medium. Therefore the PNC plays an important role in the piconet. However, the complex functions performed by the PNC requires a great deal of hardware and software resource. Accordingly when the conventional piconet is applied to universal serial bus (USB) devices or wireless 1394, a method by which resources can be more efficiently utilized is desirable, even though the conventional PNC is not used.

Moreover, there is a requirement, when operating the piconet without using the conventional PNC, to ensure that the piconet is operationally compatible with conventional PNC devices. This problem is addressed by the present invention.

WO-A-02/052793 describes a network having the pre-characterising features of claim 1 appended hereto.

The present invention relates to an apparatus according to claim 1 appended hereto.

The present invention also relates to a method according to claim 15 appended hereto.

The apparatus and method according to the present invention are advantageous because priority is effectively given to the conventional PNC. Therefore, if the conventional PNC tries to associate with the virtual network set up as explained hereinafter, the virtual network will be terminated to avoid a conflict. For a device to "associate" with a network, the skilled person will appreciate that this means that the device wishes to become part of, or join, the existing network.

An embodiment of the present invention will now be described, by way of example only, with reference to Figures 2 to 6 of the accompanying drawings, in which:
Figure 1 shows a schematic block diagram of a known piconet containing a PNC and three USB devices;
Figure 2 shows a block diagram of a piconet containing a virtual PNC according to one embodiment of the present invention, and USB devices;
Figure 3 shows a schematic block diagram of the arrangement and operations of modules for implementing the virtual PNC according to one embodiment of the present invention;
Figure 4 shows PNC-executable commands and virtual PNC-executable commands among all commands provided by IEEE 802.15.3;
Figure 5A shows the structure of a superframe that a known PNC transmits to member devices of a piconet during a beacon period;
Figure 5B shows the structure of a superframe that the virtual PNC of the present invention transmits to member devices of the piconet during the beacon period, when using a peer-to-peer scheme;
Figure 5C shows the structure of a superframe that the virtual PNC of the present invention transmits to the member devices of the piconet during the beacon period, when using a master-slave scheme; and
Figure 6 shows a flowchart illustrating the overall operation of the piconet to which the virtual PNC of the present invention is applied.

Referring to Figure 2, the PNC is a node indispensable to the establishment of any piconet. A wireless USB host 210 and wireless USB devices 220 and 230 require association with the PNC for them to become members of the piconet. The wireless USB host 210 is a control device for making all transactions between itself and the wireless USB devices 220 and 230. The wireless USB host 210 also schedules the transactions, and executes wireless USB applications. In addition, the wireless USB devices 220 and 230 perform necessary operations in dependence on commands issued from the wireless USB host 210, and provide device functionality to the wireless USB applications.

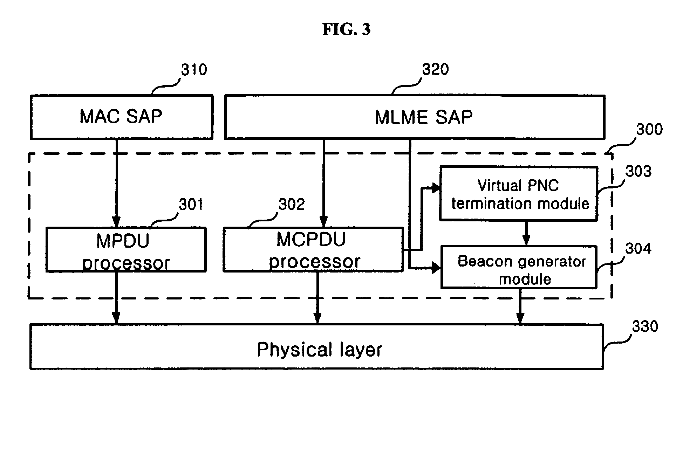

The PNC function is provided by a virtual PNC 240. This is in replacement of the conventional PNC. Unlike Figure 1, the conventional PNC does not exist in the piconet of Figure 2 and the wireless USB host 210 incorporates a virtual PNC generating device (designated by reference numeral 300 in Figure 3) . As a result, the collection of the wireless USB host 210 with its incorporated virtual PNC and the wireless USB devices 220 and 230 establish a virtual piconet 200. If the conventional PNC were to be present in the piconet, the virtual piconet 200 would shut down the function of the virtual PNC 240, and would establish the piconet using the conventional PNC. Thus, the virtual piconet 200 is compatible with an existing piconet arranged using a conventional PNC. Although Figure 2 shows, by way of example, the case of USB employing a master-slave scheme, the present invention is also applicable to IP networking or wireless 1394 based on a peer-to-peer scheme. Since the peer-to-peer scheme uses devices having an equal relationship therebetween rather than a master-slave relationship, the virtual PNC generating device (designated by reference numeral 300 in Figure 3) may be incorporated into any one of the peer-to-peer devices.

Referring to Figure 3, a media access control (MAC) server access point (SAP) 310 is shown. A MAC SAP 310 enables a MAC layer to transmit and receive data to and from an upper layer. Also, a MAC Layer Management Entity (MLME) SAP 320 is provided that is a service access point for a management entity in the MAC layer.

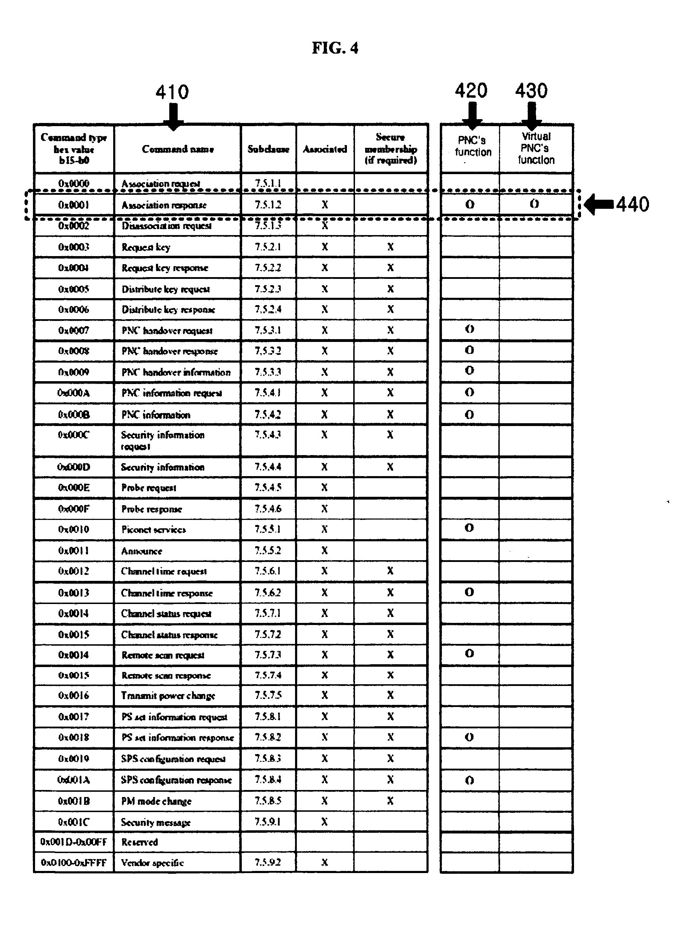

The virtual PNC generating device 300 transmits and receives data to and from the MAC SAP 310, the MLME SAP 320 and a physical layer 330. The virtual PNC generating device 300 comprises a MAC protocol data unit (MPDU) processor 301, a MAC command protocol data unit (MCPDU) processor 302, a virtual PNC termination module 303 and a beacon generator module 304. One reason for the presence of the PNC in a piconet is that the PNC has the function of managing the number of members in the piconet. The number of members depends on the connection or disconnection of each device to and from the piconet. Therefore, the PNC receives association requests from the devices and returns association responses to devices. In the absence of the conventional PNC, the virtual PNC generating device 300 of the present invention only issues responses to association requests among the many functions of the conventional PNC as shown in Figure 4. Therefore the virtual PNC of the present invention uses far fewer resources than the conventional PNC. In an ad hoc network consisting of nodes which do not have the PNC as in a conventional wireless PAN, a wireless medium can be shared by a number of nodes through transaction scheduling. This greatly reduces hardware and software resources.

The MPDU processor 301 is responsible for the function of processing a MAC protocol data unit (MPDU), and the MAC protocol data unit (MCPDU) processor 302 is responsible for the function of processing a MCPDU. Both the MPDU processor 301, and the MCPDU processor 302 are known to a skilled person in the art.

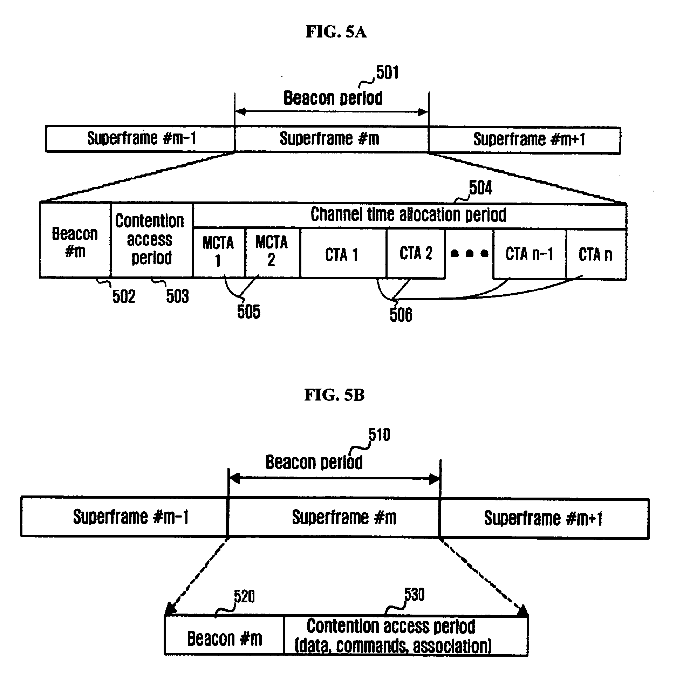

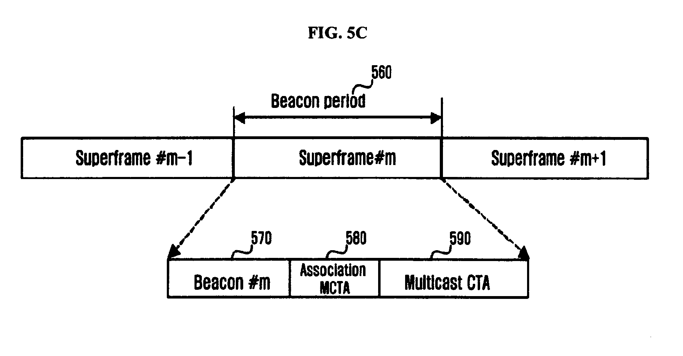

The beacon generator module 304 generates a beacon that enables a device lacking a PNC function to perform the virtual PNC function of the present invention. A superframe constructed by the generated beacon has a structure shown in Figure 5B or 5C. The beacon includes information on a contention access period (CAP), information on management channel time allocation (MCTA) for a device wanting to associate with the piconet, information on CTA for multicast or broadcast, and an application specific information element for identifying the virtual PNC. If the virtual piconet is shut down, the beacon further includes a shutdown information element.

The virtual PNC termination module 303 serves to disable the virtual PNC function. The virtual PNC termination module 303 receives information on the presence of a conventional PNC associated with the piconet. This information is received from the MCPDU. The virtual PNC termination module 303 shuts down the virtual piconet, and instructs the beacon generator module 304 to inform other devices within the piconet of this event.

The virtual PNC generator device having the aforementioned features may be implemented in software, firmware or hardware. Additionally, it may be implemented as part of an application within the upper layer of the MAC layer.

Figure 4 shows conventional PNC-executable commands and virtual PNC-executable commands among all commands provided by IEEE 802.15.3. The following description will focus on a command name column 410 listing commands executable by all devices in the piconet, a PNC function column 420 in which PNC-executable commands are shown, and a virtual PNC function column 430 in which virtual PNC-executable commands are shown.

The conventional PNC can execute a number of functions as listed, such as a PNC handover request, a PNC handover response and a channel time response as well as the association response. However, the virtual PNC has only the association response function. This function is executed to provide a response to a request from a new device to be associated with the virtual piconet. (refer to 440 in Figure 4).

Figure 5A shows the structure of a superframe that the known PNC transmits to member devices of the piconet during a beacon period (501). According to IEEE 802.15.3, the MAC frame is included in a superframe having a time-based structure, as shown in this figure.

The beacon has a section 502 in which a beacon serial number is recorded, and a subsequent section 503 for indicating a contention access period (CAP). The CAP is defined as a period in which the time of transmission/reception of data by devices is determined through a contention scheme such as carrier sense multiple access/collision avoidance (CSMA/CA). The CAP does not necessarily exist in the superframe and may be omitted in dependence on the piconet structure or by user preference. Next, there is a section 506 for indicating a channel time allocation (CTA) period. MCTAs 505 are distributed to respective devices within the CTA period. Here, the MCTA means a management CTA 441.

Figure 5B shows the structure of a superframe that the virtual PNC of the present invention transmits to member devices of the piconet during the beacon period 510, when using a peer-to-peer scheme. The superframe has a section 520 in which a beacon serial number is recorded and a subsequent section 530 for indicating a CAP, in a similar manner to the superframe of the conventional PNC.

Individual devices employing the peer-to-peer scheme, i.e. devices in IP networking, wireless 1394 or the like, can independently perform one packet transactions. In this embodiment, the CAP is allocated during the beacon period using CSMA/CA. Accordingly, each device in the peer-to-peer scheme transmits and receives association details, data and commands through the CSMA/CA contention scheme during the CAP.

Figure 5C shows the structure of a superframe that the virtual PNC of the present invention transmits to the member devices of the piconet during the beacon period, when a master-slave scheme is used. The superframe also has a section 570 in which a beacon serial number is recorded, and a section for allocating association MCTA or CAP data allowing a new slave device to be associated with the virtual PNC (in this embodiment, section 580 is for allocating the association MCTA).

Since the wireless USB host performs scheduling of all wireless communications in devices employing the master-slave scheme, such as wireless USB, CTAs having multicast or broadcast destinations are used to transmit data and commands. According to this embodiment, a multicast CTA section 590 is placed after the association MCTA section so that the multicast CTA can be used.

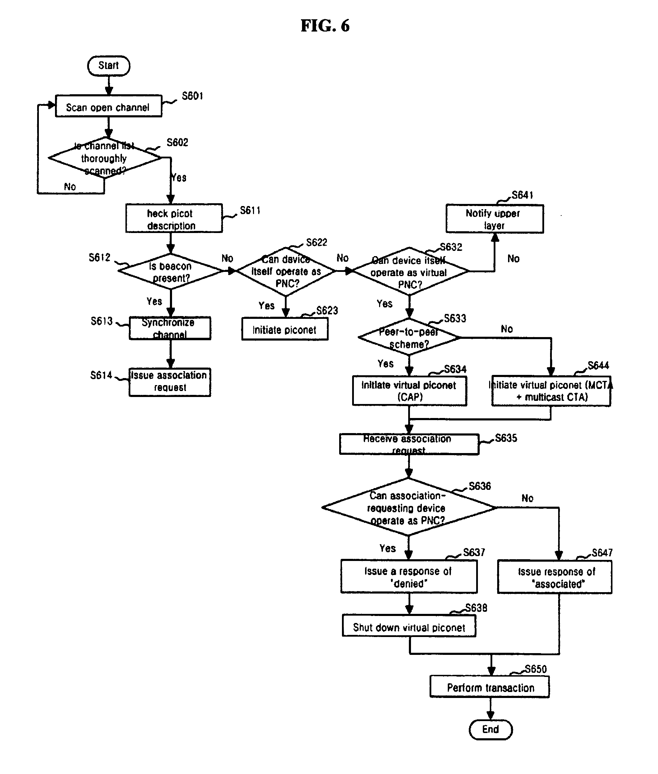

A method of the present invention that enables devices to communicate with one another in the piconet lacking the PNC as shown in Figure 2 will be described by way of example in connection with a wireless USB application. As shown in Figure 6, one device first scans channels present on a wireless medium (S601). At this time, an open scan is conducted. The open scan is used when a desired piconet is not specifically designated, meaning that all potential piconets are searched. Alternatively, only a specifically designated piconet may be scanned and searched for. However, it is understood that a combination of the open scan and specific piconet searches may be implemented. In this embodiment, the open scan is employed and the presence of a beacon is passively detected without probing the presence of the PNC. A channel list is generated and is thoroughly checked (S602). As a result, it is possible to know which channel has a beacon, based on the piconet description (S611). This means that a "check piconet description" step is carried out at S611.

It is then determined whether the beacon is present in a channel (S612) or not. If it is determined that the beacon is present in the channel (S612), the channel is synchronized through synchronization (S613) and association with the piconet of the desired channel is conducted. The device then operates as a member device in the piconet (S614). If it is determined that the beacon does not exist, it is determined whether the device itself can construct the piconet, i.e. the device can operate as a PNC (S622). If the device can operate as the PNC, the device constructs its own piconet and functions as both the PNC and a device in the piconet (S623). However, if the device cannot operate as the PNC, it is checked whether the device can operate as the virtual PNC (S632) according to the present invention.

If it is determined that the device cannot operate as the virtual PNC, an upper layer of the programme stack is notified of this fact (S641). Then, the upper layer will determine the following actions. For example, the upper layer may wait for a device serving as the PNC or virtual PNC to appear, or select a different communication method.

If it is determined that the device can operate as the virtual PNC, the following steps will be carried out in dependence on features of an application of the upper layer (S633). If the application of the upper layer is based on the peer-to-peer scheme such as IP networking or wireless 1395, each device can individually perform one packet transaction. Therefore, a wireless channel needs to be shared by a number of respective devices. Access to the wireless channel can be gained through CSMA/CA or a "Slotted Aloha" method that enables reduction in conflict risk by time division channel allocation. In the present embodiment, the CAP using CSMA/CA is allocated during the beacon period (S634). In this case, the superframe will have the structure shown in Figure 5B. This is different to the known structure of the superframe used in case of the presence of the PNC shown in Figure 5A.

Alternatively, if the application is based on the master-slave scheme, the wireless USB host performs the scheduling of all wireless media, as in the wireless USB. Therefore, it is possible to allocate association MCTA or CAP to allow the association of a new device. In this embodiment, the association MCTA is employed. For the transmission of data and commands, CTAs having multicast or broadcast destinations are allocated to the remainder of the beacon period. In this embodiment, the superframe will have a structure as shown in Figure 5C, which is different to the known structure of a superframe used in the presence of the PNC shown in Figure 5A.

When the virtual piconet is constructed by transmitting the beacon, a new device issues an association request so as to become a member of the piconet (S635). It is determined whether the new device can operate as a conventional PNC or not (S636). If the new device can operate as the conventional PNC, an association response of "denied" is returned (S637) to shut down the virtual piconet (S638). The piconet shut-down procedure includes incorporating a shut-down information element into the beacon. If the device cannot operate as the PNC, an association response of "associated" is returned (S647).

Finally, when using devices based on IP networking or wireless 1395, transactions are performed using the peer-to-peer scheme. In case of wireless USB devices, the host device performs application transactions with the wireless USB devices (S650).

According to the present invention, there are advantages in that communications can be made among devices by using the virtual PNC with simplified functions even in the piconet that lacks a PNC, and compatibility with an existing piconet using a PNC can be ensured.

Further, there is an advantage in that it is possible to reduce the burden on implementation of the PNC function that requires a large amount of hardware or software resources.

## Claims

1. An apparatus (240) for managing a wireless network (200), comprising a receiver capable of receiving a signal from a wireless device (220, 230) indicative of the device wanting to associate with the network and a beacon generator (304), **characterised by** the beacon generator (304) being configured to construct the wireless network (200) as a virtual piconet network (200) by generating a beacon signal, and the apparatus (240) further including a virtual piconet coordinator, PNC, termination module (303) for terminating the virtual piconet network when the wireless device (220,230) wanting to associate with the virtual piconet network is a PNC-capable device.

2. An apparatus (240) according to claim 1, wherein the beacon signal contains information indicating that the apparatus (240) is terminating the wireless network (200).

3. An apparatus (240) according to either of claims 1 or 2, wherein the wireless network (200) is a peer-to-peer network and the beacon signal includes information indicating a contention access period.

4. An apparatus according to either of claims 1 or 2, wherein the wireless network (200) is a master/slave network and the beacon signal includes information indicating multicast channel time allocation and/or management channel time allocation.

5. An apparatus (240) according to claim 1, wherein the beacon generator (304) is configured to construct the virtual piconet network by generating the beacon so that a device lacking a piconet coordinator, PNC, function can perform a virtual PNC function.

6. An apparatus (240) as claimed in claim 5, further comprising:
a media access control, MAC, protocol data unit, MPDU, processor (301) for processing MAC protocol data units; and
a MAC command protocol data unit, MCPDU, processor (302) for processing MAC command protocol command data units and transferring the association to the virtual PNC termination module (303) when the association of the PNC-capable device exists.

7. An apparatus (240) as claimed in claim 3, wherein a contention access period, CAP, section indicates a section in which a carrier sense multiple access/collision avoidance, CSMA/CA, scheme is used when transmission and reception of data and commands and the association are performed.

8. An apparatus as claimed in claim 3, wherein a contention access period, CAP, section indicates a section in which a Slotted Aloha scheme is used when transmission and reception of data and commands and the association are performed.

9. An apparatus as claimed in claim 5, wherein if an application of the device comprising the virtual PNC is based on a master-slave scheme, a superframe generated by the beacon generator module includes an association management channel time allocation, MCTA, section and a multicast channel time allocation, CTA, section.

10. A wireless network (200) comprising:
an apparatus (240) according to claim 1; and
a wireless device (220, 230), wherein the wireless device (220, 230) is arranged to generate the signal indicative of the device wanting to associate with the wireless network in response to receiving the beacon signal from the apparatus indicative of the wireless network being a virtual piconet network (240).

11. A piconet system comprising a plurality of devices, wherein:
at least one of the plurality of devices comprises an apparatus according to claim 5.

12. A system as claimed in claim 11, wherein the apparatus comprises:
a media access control, MAC, protocol data unit MPDU, processor (301) for processing MAC protocol data units; and
a MAC command protocol data unit, MCPDU, processor (302) for processing MAC command protocol command data units.

13. A system as claimed in claim 11, wherein if an application of a device comprising the virtual PNC is based on a peer-to-peer scheme, a superframe generated by the beacon generator module includes a contention access period, CAP, section.

14. A system as claimed in claim 11, wherein if an application of a device comprising the virtual PNC is based on a master-slave scheme, a superframe generated by the beacon generator module includes an association management channel time allocation, MCTA, section and a multicast channel time allocation, CTA, section.

15. A method of managing a wireless network (200), comprising receiving a signal from a wireless device (220, 230) indicative of the device wanting to associate with the network and generating a beacon signal, **characterised by** constructing the wireless network (200) as a virtual piconet network (200) by generating the beacon signal, and terminating the virtual piconet network when the wireless device (220, 230) wanting to associate with the virtual piconet network is a piconet coordinator, PNC, capable device.

16. A method according to claim 15 wherein the beacon signal contains information indicating that the network (200) should be terminated.

17. A method according to claim 15, comprising:
(a) determining whether an application resident in an upper layer of the media access control, MAC, layer is based on a peer-to-peer scheme;
(b) initiating the virtual piconet depending on the determination results;
(c) receiving an association request from one of the wireless devices (220,230)using the virtual piconet coordinator, PNC, in the virtual piconet; and
(d) performing an application transaction with said one of the wireless devices (220,230)that has issued the association request.

18. A method as claimed in claim 17, wherein the step (b) comprises the step of determining whether the application is based on the peer-to-peer scheme, and if it is determined that the application is based on the peer-to-peer scheme, a superframe generated by the virtual PNC includes a contention access period, CAP, section.

19. A method as claimed in claim 17, wherein the step (b) comprises the step of determining whether the application is based on the peer-to-peer scheme, and if it is determined that the application is not based on the peer-to-peer scheme, a superframe generated by the virtual PNC includes an association management channel time allocation, MCTA, section and a multicast channel time allocation, CTA, section.

20. A method as claimed in claim 17, after the step (c), further comprising the step of determining whether said one of the wireless devices (220, 230) that has issued the association request can operate as a PNC.

21. A method as claimed in claim 20, further comprising the steps of, if it is determined that said one of the wireless devices (220,230) can operate as the PNC;
sending an association-denying response to the device that has issued the association request; and
shutting down the virtual piconet network.

22. A method as claimed in claim 21, wherein the step of shutting down the virtual piconet comprises the step of incorporating a shut-down information element into the beacon signal.

23. A method as claimed in claim 18, further comprising the steps of, if it is determined that said one of the wireless devices (220,230) cannot operate as the PNC,
maintaining the virtual piconet as it is and sending a response of "associated" to said one of the wireless devices (220,230)that has issued the association request.

24. A method as claimed in claim 17, before the step (a), further comprising the steps of:
determining whether a beacon is detected in an existing device, and performing association with a piconet coordinator, PNC, that has generated the beacon if it is determined that the beacon exists, or determining whether the existing device (220,230) can operate as a PNC if it is determined that the beacon does not exist;
performing one of initiating an actual piconet if it is determined that the existing device (220,230) can operate as the PNC, and determining whether the existing device (220, 230) can operate as a virtual PNC if it is determined that the existing device (220, 230) cannot operate as the PNC; and
if it is determined that the existing device (220,230) cannot operate as the virtual PNC, notifying the upper layer of the fact, and if it is determined that the existing device (220, 230) can operate as the virtual PNC, proceeding to the step (a).

25. A computer program comprising codes for controlling a computer, having a wireless networking capability, to perform all the steps of a method according to any one of claims 15 to 24.

26. A data carrier having a computer program according to claim 25 recorded thereon or therein.

## Patentansprüche

1. Vorrichtung (240) zum Verwalten eines drahtlosen Netzes (200), umfassend einen Empfänger, der imstande ist, ein Signal von einer drahtlosen Einrichtung (220, 230) zu empfangen, das anzeigt, dass die Einrichtung mit dem Netz assoziiert werden möchte, und einen Bakengenerator (304), **gekennzeichnet dadurch, dass** der Bakengenerator (304) konfiguriert ist, um das drahtlose Netz (200) als ein virtuelles Piconetz-Netz (200) durch Erzeugen eines Bakensignals aufzubauen, und die Vorrichtung (240) weiter enthaltend ein Abschlussmodul (303) eines virtuellen Piconetz-Koordinators, PNC, zum Abschließen des virtuellen Piconetz-Netzes, wenn die drahtlose Einrichtung (220, 230), die mit dem virtuellen Piconetz-Netz assoziiert werden möchte, eine PNC-fähige Einrichtung ist.

2. Vorrichtung (240) nach Anspruch 1, wobei das Bakensignal Informationen enthält, die anzeigen, dass die Vorrichtung (240) das drahtlose Netz (200) abschließt.

3. Vorrichtung (240) nach einem der Ansprüche 1 oder 2, wobei das drahtlose Netz (200) ein Partner-zu-Partner-Netz ist und das Bakensignal Informationen enthält, die eine Konfliktzugangsperiode anzeigen.

4. Vorrichtung nach einem der Ansprüche 1 oder 2, wobei das drahtlose Netz (200) ein Master/Slave-Netz ist und das Bakensignal Informationen enthält, die eine Rundsende-Kanalzeitzuteilung und/oder Verwaltungs-Kanalzeitzuteilung anzeigen.

5. Vorrichtung (240) nach Anspruch 1, wobei der Bakengenerator (304) konfiguriert ist, um das virtuelle Piconetz-Netz durch Erzeugen des Baken aufzubauen, so dass eine Einrichtung, die nicht über eine Funktion eines Piconetz-Koordinators, PNC, verfügt, eine virtuelle PNC-Funktion ausführen kann.

6. Vorrichtung (240) nach Anspruch 5, weiter umfassend:
einen Prozessor (301) einer Protokolldateneinheit, MPDU, einer Medienzugangssteuerung, MAC, zum Verarbeiten von MAC-Protokolldateneinheiten; und
einen Prozessor (302) einer MAC-Befehlsprotokolldateneinheit, MCPDU, zum Verarbeiten von MAC-Befehlsprotokollbefehlsdateneinheiten und Übertragen der Assoziation an das Abschlussmodul (303) des virtuellen PNC, wenn die Assoziation der PNCfähigen Einrichtung existiert.

7. Vorrichtung (240) nach Anspruch 3, wobei ein Abschnitt einer Konfliktzugangsperiode, CAP, einen Abschnitt anzeigt, in dem eine Anordnung einer Trägerkennung-Vielfachzugriff/Kollisionsvermeidung, CSMA/CA, verwendet wird, wenn Übertragung und Empfang von Daten und Befehlen und die Assoziation ausgeführt werden.

8. Vorrichtung nach Anspruch 3, wobei ein Abschnitt einer Konfliktzugangsperiode, CAP, einen Abschnitt anzeigt, in dem eine Slotted Aloha-Anordnung verwendet wird, wenn Übertragung und Empfang von Daten und Befehlen und die Assoziation ausgeführt werden.

9. Vorrichtung nach Anspruch 5, wobei, wenn eine Anwendung der Einrichtung, die den virtuellen PNC umfasst, auf einer Master-Slave-Anordnung basiert, ein Überrahmen, der von dem Bakengeneratormodul erzeugt wird, einen Abschnitt einer Assoziationsverwaltungs-Kanalzeitzuteilung, MCTA, und einen Abschnitt einer Rundsende-Kanalzeitzuteilung, CTA, enthält.

10. Drahtloses Netz (200), umfassend:
eine Vorrichtung (240) nach Anspruch 1; und
eine drahtlose Einrichtung (220, 230), wobei die drahtlose Einrichtung (220, 230) angeordnet ist, um das Signal, das anzeigt, dass die Einrichtung mit dem drahtlosen Netz assoziiert werden möchte, als Reaktion auf den Empfang des Bakensignals von der Vorrichtung (240), das anzeigt, dass das drahtlose Netz ein virtuellen Piconetz-Netz ist, zu erzeugen.

11. Piconetz-System, umfassend eine Vielzahl von Einrichtungen, wobei:
mindestens eine der Vielzahl von Einrichtungen eine Vorrichtung nach Anspruch 5 umfasst.

12. System nach Anspruch 11, wobei die Vorrichtung umfasst:
einen Prozessor (301) einer Protokolldateneinheit, MPDU, einer Medienzugangssteuerung, MAC, zum Verarbeiten von MAC-Protokolldateneinheiten; und
einen Prozessor (302) einer MAC-Befehlsprotokolldateneinheit, MCPDU, zum Verarbeiten von MAC-Befehlsprotokollbefehlsdateneinheiten.

13. System nach Anspruch 11, wobei, wenn eine Anwendung einer Einrichtung, die den virtuellen PNC umfasst, auf einer Partner-zu-Partner-Anordnung basiert, ein Überrahmen, der von dem Bakengeneratormodul erzeugt wird, einen Abschnitt einer Konfliktzugangsperiode, CAP, enthält.

14. System nach Anspruch 11, wobei, wenn eine Anwendung einer Einrichtung, die den virtuellen PNC umfasst, auf einer Master/Slave-Anordnung basiert, ein Überrahmen, der von dem Bakengeneratormodul erzeugt wird, einen Abschnitt einer Assoziationsverwaltungs-Kanalzeitzuteilung, MCTA, und einen Abschnitt einer Rundsende-Kanalzeitzuteilung, CTA, enthält.

15. Verfahren zum Verwalten eines drahtlosen Netzes (200), umfassend, ein Signal von einer drahtlosen Einrichtung (220, 230) zu empfangen, das anzeigt, dass die Einrichtung mit dem Netz assoziiert werden möchte, und ein Bakensignal zu erzeugen, **gekennzeichnet durch** Aufbauen des drahtlosen Netzes (200) als ein virtuelles Piconetz-Netz (200) **durch** Erzeugen des Bakensignals und Abschließen des virtuellen Piconetz-Netzes, wenn die drahtlose Einrichtung (220, 230), die mit dem virtuellen Piconetz-Netz assoziiert werden möchte, eine Einrichtung ist, die Piconetz-Koordinator-, PNC, -fähig ist.

16. Verfahren nach Anspruch 15, wobei das Bakensignal Informationen enthält, die anzeigen, dass das Netz (200) abgeschlossen werden sollte.

17. Verfahren nach Anspruch 15, umfassend:
(a) Bestimmen, ob eine Anwendung, die in einer oberen Schicht der Schicht der Medienzugangssteuerung, MAC, resident ist, auf einer Parter-zu-Partner-Anordnung basiert;
(b) Initiieren des virtuellen Piconetzes in Abhängigkeit von den Bestimmungsergebnissen;
(c) Empfangen einer Assoziationsanforderung von einer der drahtlosen Einrichtungen (220, 230) unter Verwendung des virtuellen Piconetz-Koordinators, PNC, in dem virtuellen Piconetz; und
(d) Ausführen einer Anwendungstransaktion mit der einen der drahtlosen Einrichtungen (220, 230), die die Assoziationsanforderung ausgegeben hat.

18. Verfahren nach Anspruch 17, wobei der Schritt (b) den Schritt des Bestimmens umfasst, ob die Anwendung auf der Partner-zu-Partner-Anordnung basiert, und wenn bestimmt wird, dass die Anwendung auf der Partner-zu-Partner-Anordnung basiert, ein Überrahmen, der von dem virtuellen PNC erzeugt wird, einen Abschnitt einer Konfliktzugangsperiode, CAP, enthält.

19. Verfahren nach Anspruch 17, wobei der Schritt (b) den Schritt des Bestimmens umfasst, ob die Anwendung auf der Partner-zu-Partner-Anordnung basiert, und wenn bestimmt wird, dass die Anwendung nicht auf der Partner-zu-Partner-Anordnung basiert, ein Überrahmen, der von dem virtuellen PNC erzeugt wird, einen Abschnitt einer Assoziationsverwaltungs-Kanalzeitzuteilung, MCTA, und einen Abschnitt einer Rundsende-Kanalzeitzuteilung, CTA, enthält.

20. Verfahren nach Anspruch 17, nach dem Schritt (c) weiter umfassend den Schritt des Bestimmens, ob die eine der drahtlosen Einrichtungen (220, 230), die die Assoziationsanforderung ausgegeben hat, als ein PNC operieren kann.

21. Verfahren nach Anspruch 20, weiter enthaltend die folgenden Schritte, wenn bestimmt wird, dass die eine der drahtlosen Einrichtungen (220, 230) als der PNC operieren kann:
Senden einer Assoziationsablehnungsantwort an die Einrichtung, die die Assoziationsanforderung ausgegeben hat; und
Herunterfahren des virtuellen Piconetz-Netzes.

22. Verfahren nach Anspruch 21, wobei der Schritt des Herunterfahrens des virtuellen Piconetz-Netzes den Schritt umfasst, ein Herunterfahren-Informationselement in das Bakensignal zu inkorporieren.

23. Verfahren nach Anspruch 18, weiter enthaltend die folgenden Schritte, wenn bestimmt wird, dass die eine der drahtlosen Einrichtungen (220, 230) nicht als der PNC operieren kann:
Aufrechterhalten des virtuellen Piconetzes, wie es ist, und Senden einer "angebunden"-Antwort an die eine der drahtlosen Einrichtungen (220, 230), die die Assoziationsanforderung ausgegeben hat.

24. Verfahren nach Anspruch 17, vor dem Schritt (a) weiter die folgenden Schritte umfassend:
Bestimmen, ob eine Bake in einer existierenden Einrichtung detektiert wird, und Ausführen der Assoziation an einen Piconetz-Koordinator, PNC, der die Bake erzeugt hat, wenn bestimmt wird, dass die Bake existiert, oder Bestimmen, ob die existierende Einrichtung (220, 230) als ein PNC operieren kann, wenn bestimmt wird, dass die Bake nicht existiert;
Ausführen von einem von Initiieren eines tatsächlichen Piconetzes, wenn bestimmt wird, dass die existierende Einrichtung (220, 230) als der PNC operieren kann, und Bestimmen, ob die existierende Einrichtung (220, 230) als ein virtueller PNC operieren kann, wenn bestimmt wird, dass die existierende Einrichtung (220, 230) nicht als der PNC operieren kann; und
wenn bestimmt wird, dass die existierende Einrichtung (220, 230) nicht als der virtuelle PNC operieren kann, Benachrichtigen der oberen Schicht über die Tatsache, und wenn bestimmt wird, dass die existierende Einrichtung (220, 230) als der virtuelle PNC operieren kann, Fortfahren mit dem Schritt (a).

25. Computerprogramm, umfassend Codes zum Steuern eines Computers, mit einer drahtlosen Vernetzungsfähigkeit zum Ausführen sämtlicher der Schritte eines Verfahrens nach einem der Ansprüche 15 bis 24.

26. Datenträger mit einem Computerprogramm nach Anspruch 25, das darauf oder darin aufgezeichnet ist.

## Revendications

1. Appareil (240) pour gérer un réseau sans fil (200), comprenant un récepteur capable de recevoir un signal d'un dispositif sans fil (220, 230), indicatif du désir d'association du dispositif avec le réseau, et un générateur de signal de balise (304), **caractérisé par le fait que** le générateur de signal de balise (304) est configuré de façon à construire le réseau sans fil (200) comme un picoréseau virtuel (200) en générant un signal de balise, et cet appareil (240) comprenant en outre un module (303) de raccordement de coordinateur de picoréseau virtuel, PNC, pour raccorder le picoréseau virtuel lorsque le dispositif sans fil (220, 230) désirant s'associer au picoréseau virtuel est un dispositif capable de PNC.

2. Appareil (240) selon la revendication 1, dans lequel le signal de balise contient une information indiquant que l'appareil (240) est en train de raccorder le réseau sans fil (200).

3. Appareil (240) selon l'une des revendications 1 ou 2, dans lequel le réseau sans fil (200) est un réseau poste à poste et le signal de balise comprend une information indiquant une période d'accès par contention.

4. Appareil selon l'une des revendications 1 ou 2, dans lequel le réseau sans fil (200) est un réseau maître/esclave et le signal de balise comprend une information indiquant l'attribution du temps du canal de multi-diffusion et/ou l'attribution du temps du canal de gestion.

5. Appareil (240) selon la revendication 1, dans lequel le générateur de signal de balise (304) est configuré de façon à construire le picoréseau virtuel en générant la balise de façon à ce qu'un dispositif ne comportant pas de fonction de coordinateur de picoréseau, PNC, puisse effectuer une fonction PNC virtuelle.

6. Appareil (240) selon la revendication 5, comprenant en outre :
un processeur MPDU (301) d'unités de données de protocole de commande d'accès au support, MAC, pour traiter les unités de données de protocole MAC ; et
un processeur MCPDU (302) d'unités de données de protocole de commande MAC pour traiter les unités de données de commande de protocole de commande MAC et transférer l'association au module de raccordement PNC virtuel (303) lorsque l'association du dispositif capable de PNC existe.

7. Appareil (240) selon la revendication 3, dans lequel une section de période d'accès par contention, CAP, indique une section dans laquelle on utilise un système d'accès multiple avec écoute de porteuse/d'évitement de collision, CSMA/CA, lorsque l'émission et la réception de données et de commandes et l'association sont exécutées.

8. Appareil selon la revendication 3, dans lequel une section de période d'accès par contention, CAP, indique une section dans laquelle on utilise un système Aloha crénelé lorsque l'émission et la réception de données et de commandes et l'association sont exécutées.

9. Appareil selon la revendication 5, dans lequel, si une application du dispositif comprenant le PNC virtuel est basée sur un système maître-esclave, une supertrame générée par le module générateur de signal de balise comprend une section d'attribution du temps du canal de gestion d'association, MCTA, et une section d'attribution du temps du canal de multi-diffusion, CTA.

10. Réseau sans fil (200) comprenant :
un appareil (240) selon la revendication 1 ; et
un dispositif sans fil (220, 230), ce dispositif sans fil (220, 230) étant agencé de façon à générer le signal indicatif du désir du dispositif de s'associer au réseau sans fil en réponse à la réception du signal de balise venant de l'appareil, indicatif du fait que le réseau sans fil est un picoréseau virtuel (240).

11. Système picoréseau comprenant une pluralité de dispositifs, dans lequel :
au moins un de la pluralité de dispositifs comprend un appareil selon la revendication 5.

12. Système selon la revendication 11, dans lequel l'appareil comprend :
un processeur MPDU (301) d'unités de données de protocole de commande d'accès au support, MAC, pour traiter les unités de données de protocole MAC ; et
un processeur MCPDU (302) d'unités de données de protocole de commande MAC pour traiter les unités de données de commande du protocole de commande MAC.

13. Système selon la revendication 11, dans lequel, si une application d'un dispositif comprenant le PNC virtuel est basée sur un système poste à poste, une supertrame générée par le module générateur de signal de balise comprend une section de période d'accès par contention, CAP.

14. Système selon la revendication 11, dans lequel, si une application d'un dispositif comprenant le PNC virtuel est basée sur un système maître-esclave, une supertrame générée par le module générateur de signal de balise comprend une section d'attribution du temps du canal de gestion d'association, MCTA, et une section d'attribution du temps du canal de multi-diffusion, CTA.

15. Procédé de gestion d'un réseau sans fil (200), comprenant la réception d'un signal provenant d'un dispositif sans fil (220, 230), indicatif du désir de ce dispositif de s'associer au réseau et la génération d'un signal de balise, **caractérisé par** la construction du réseau sans fil (200) comme un picoréseau virtuel (200) en générant le signal de balise, et le raccordement de ce picoréseau virtuel lorsque le dispositif sans fil (220, 230) désirant s'associer au picoréseau virtuel est un dispositif capable d'une fonction de coordinateur de picoréseau, PNC.

16. Procédé selon la revendication 15, dans lequel le signal de balise contient une information indiquant que le réseau (200) devrait être raccordé.

17. Procédé selon la revendication 15, comprenant :
(a) la détermination de si oui ou non une application résidant dans une couche supérieure de la couche de commande d'accès au support, MAC, est basée sur un système poste à poste ;
(b) l'établissement du picoréseau virtuel suivant les résultats de cette détermination ;
(c) la réception d'une demande d'association venant d'un des dispositifs sans fil (220, 230) en utilisant le coordinateur de picoréseau virtuel, PNC, dans le picoréseau virtuel ; et
(d) l'exécution d'une transaction d'application avec ledit un des dispositifs sans fil (220, 230) qui a émis la demande d'association.

18. Procédé selon la revendication 17, dans lequel l'étape (b) comprend l'étape consistant à déterminer si l'application est basée sur un système poste à poste et, s'il est déterminé que l'application est basée sur le système poste à poste, une supertrame générée par le PNC virtuel comprend une section de période d'accès par contention, CAP.

19. Procédé selon la revendication 17, dans lequel l'étape (b) comprend l'étape consistant à déterminer si l'application est basée sur un système poste à poste et, s'il est déterminé que l'application n'est pas basée sur le système poste à poste, une supertrame générée par le PNC virtuel comprend une section d'attribution du temps du canal de gestion d'association, MCTA, et une section d'attribution du temps du canal multi-diffusion, CTA.

20. Procédé selon la revendication 17, comprenant en outre, après l'étape (c), l'étape consistant à déterminer si ledit un des dispositifs sans fil (220, 230) qui a émis la demande d'association peut fonctionner comme un PNC.

21. Procédé selon la revendication 20, comprenant en outre, s'il est déterminé que ledit un des dispositifs sans fil (220, 230) peut fonctionner comme le PNC, les étapes consistant à :
envoyer une réponse de refus d'association au dispositif qui a émis la demande d'association ; et
couper le picoréseau virtuel.

22. Procédé selon la revendication 21, dans lequel l'étape de coupure du picoréseau virtuel comprend l'étape consistant à incorporer un élément d'information de coupure dans le signal de balise.

23. Procédé selon la revendication 18, comprenant en outre, s'il est déterminé que ledit un des dispositifs sans fil (220, 230) ne peut pas fonctionner comme le PNC, les étapes consistant à :
maintenir le picoréseau virtuel tel quel et envoyer une réponse "associé" audit un des dispositifs sans fil (220, 230) qui a émis la demande d'association.

24. Méthode selon la revendication 17, comprenant en outre, avant l'étape (a), les étapes consistant à :
déterminer si une balise est détectée dans un dispositif existant, et à exécuter l'association avec un coordinateur de picoréseau, PNC, qui a généré la balise s'il est déterminé que la balise existe, ou déterminer si le dispositif existant (220, 230) peut fonctionner comme un PNC s'il est déterminé que la balise n'existe pas ;
exécuter l'établissement d'un picoréseau réel s'il est déterminé que le dispositif existant (220, 230) peut fonctionner comme le PNC, et déterminer si le dispositif existant (220, 230) peut fonctionner comme un PNC virtuel s'il est déterminé que le dispositif existant (220, 230) ne peut pas fonctionner comme le PNC ; et
s'il est déterminé que le dispositif existant (220, 230) ne peut pas fonctionner comme le PNC virtuel, notifier la couche supérieure de ce fait, et s'il est déterminé que le dispositif existant (220, 230) peut fonctionner comme le PNC visuel, passer à l'étape (a).

25. Programme informatique comprenant des codes pour commander un ordinateur, ayant une capacité de réseautage sans fil, pour effectuer toutes les opérations d'un procédé selon l'une quelconque des revendications 15 à 24.

26. Support d'information ayant un programme informatique selon la revendication 25 enregistré sur celui-ci ou dans celui-ci.
